(19) **Europäisches Patentamt European Patent Office Office européen des brevets**

(11) **EP 4 782 947 A1**

(12) **EUROPEAN PATENT APPLICATION**

(43) Date of publication:
29.07.2026 Bulletin 2026/31

(21) Application number: 26154298.9

(22) Date of filing: 27.01.2026

(51) International Patent Classification (IPC):
*G05B 23/02* $^{(2006.01)}$

(52) Cooperative Patent Classification (CPC):
**G05B 23/024; G05B 23/0275**

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 27.01.2025 US 202519037908

(71) Applicant: AspenTech Corporation
Bedford, MA 01730 (US)

(72) Inventors:
• **Rai, Gaurav**
Billerica, Massachusetts, 01821 (US)

• **Tafazoli, Sadaf**
Jefferson, Maine, 04348 (US)
• **Bechara, David**
Methuen, Massachusetts, 01844 (US)
• **Vivas, Jimmy**
Richmond, Texas, 77407 (US)
• **Zozulia, Yuliia**
Lincoln, Massachusetts, 01773 (US)
• **Rosales Jimenez, Victor Josue**
Lexington, Massachusetts, 02420 (US)

(74) Representative: **Bandpay & Greuter**
**11 rue Christophe Colomb**
**75008 Paris (FR)**

(54) **ALERTS MANAGER**

(57) A computer-implemented system comprising and corresponding method of an improved alert manager. The alert manager receives multiple alerts and calculates a similarity score between pairs of alerts. Based on the calculated similarity scores, the multiple alerts are categorized and grouped. The alert manager outputs indications of groupings of similar alerts enabling a user to better triage and comprehend the alerts. Grouping similar alerts can also improve the ability of a user or automated system to determine a shared cause of multiple alerts and thus more effectively identify and implement the necessary corrective actions. Embodiments of the alert manager include a dynamic issue container that updates with alerts' evolution while providing a singular view of the status and history of alerts' associated problem/asset/process chain.

| SENSOR | SENSOR CONTRIBUTIONS |
|--------|----------------------|
| S1 | 0.31 |
| S2 | 0.11 |
| S3 | 0.2 |
| S4 | 0.29 |
| S5 | 0.09 |

SORT THE SENSORS AND ASSIGN RELEVANCE IN DESENDING ORDER 305 →

| SENSOR | SENSOR RELEVANCE |
|--------|------------------|
| S1 | 5 |
| S4 | 4 |
| S3 | 3 |
| S2 | 2 |
| S5 | 1 |

FIG. 3A

EP 4 782 947 A1

| SENSOR | SENSOR CONTRIBUTIONS |
|---|---|
| S7 | 0.11 |
| S6 | 0.31 |
| S5 | 0.29 |
| S1 | 0.09 |
| S2 | 0.2 |

SORT THE SENSORS AND ASSIGN RELEVANCE USING THE TABLE FOR ALERT 1

305

| SENSOR | RANK | RELEVANCE SCORE BASED ON ALERT 1 |
|---|---|---|
| S6 | 1 | 0 |
| S5 | 2 | 1 |
| S2 | 3 | 2 |
| S7 | 4 | 0 |
| S1 | 5 | 5 |

FIG. 3B

## Description

BACKGROUND

Asset health monitoring software, for example Mtell® by Aspen Technology, Inc. (of Applicant Assignee), receives as input periodic data from various sensors monitoring a chemical or the like process and, based on the learnt behavior and relationship amongst them, sends alerts/alarms to a user when the monitored process or equipment involved deviates from its normal operation. The alerts/alarms can be generated by software or modules such as machine learning based agents. Deviation from normal operation can be a sign of an anomaly in plant operation, can indicate impending failure, or can provide notice of required maintenance.

As the complexity of monitored processes increases, the number of generated alerts also increases and requires users to interact daily with a multitude of alerts from the asset health monitoring system. These alerts are independent (as if occurring in isolation) and contain no information about their link to other ongoing or historical alerts. The relevancy and substance of these alerts can evolve over time, leading to challenges in their timely and accurate interpretation. Often, users grapple with determining the real-time relevance of an alert or understanding its evolution. Additionally, the often-manual evaluation process for these alerts requires looking through multiple lenses, such as equipment history, accuracy of the agent generating the alert, and its resemblance to other historical alerts. This extensive evaluation process leads to delaying crucial decisions on actionable responses. Given the interdependent nature of these environments, collaboration among various stakeholders is essential. Yet, most collaborative efforts and domain-specific insights are lost in disjointed communication channels, like email chains. Thus, there is a need to present alerts to users in an improved fashion that enables fast interpretation and reaction.

SUMMARY

Applicants address the foregoing needs and shortcomings in the art. In particular, embodiments of the present disclosure can provide computer-implemented methods and systems that automatically analyze and categorize alerts so that the alerts can be presented to users in a coherent, organized, and streamlined manner enabling relatively fast interpretation and, if needed, responsive action.

Embodiments provide a novel method and system that revolutionizes the alert management process and user experience by providing any one or combination of: (i) introducing a dynamic issue container that updates with alerts' evolution, (ii) providing a singular view of the status and history of alerts' associated problem/asset/process chain, (iii) centralizing collaboration, (iv) ensuring all stakeholders access consistent information, share comments, and align on decision, (v) connecting alerts to associated assets in the context of their site/process chain, (vi) facilitating a faster diagnosis of potential issues, and (vii) integrating tools that allow users to explore the current state and historical context of connected sensors and agents, making decision-making more informed and streamlined. Applicant's present disclosure provides these advantages and contributions to the art.

As used herein, the term "associated problem/asset/process chain" means associated problem and/or associated asset, and/or associated process chain. That is, the term means any one or combination of: (a) associated problem, (b) associated, related, or otherwise involved asset (e.g, plant component or element), and (c) associated process chain, in a chemical or similar process of a processing plant (e.g., refinery, pharmaceutical manufacturing plant, or other industrial factory).

Embodiments include a computer-implemented method of plant process monitoring, comprising receiving multiple alerts regarding a process at a given plant, each alert being based on measurements generated by a corresponding set of sensors of the given plant, , said receiving being performed by a digital processor. The method also includes for pairs of the received multiple alerts, automatically calculating by the digital processor a similarity score based on the corresponding set of sensors of the pairs of the received multiple alerts, resulting in calculated similarity scores across the received multiple alerts. The method categorizes based on the calculated similarity scores, different alerts of the received multiple alerts into at least one group of alerts, said categorizing being performed by the digital processor in response to the calculating and generates output indicative of the at least one group of alerts in a manner enabling increased accuracy in interpreting alerts and in monitoring the process at the given plants.

At least one alert of the received multiple alerts mya be generated by a machine learning model. At least one alert of the received multiple alerts can be indicative of failure, damage, likelihood of failure, or malfunction of a process unit of the process at the given plant. At least two alerts of the received multiple alerts may have occurred during different time periods

The computer-implemented method can further include determining a shared cause of different alerts in the received multiple alerts based upon the generated output of the at least one group of alerts.

Calculating the similarity scores of the pairs of the received multiple alerts can be further based upon a number of sensors that overlap between the corresponding sets of sensors of the pairs of the received multiple alerts.

Each sensor in a corresponding set of sensors may have a sensor rank based on the sensor's contribution to an alert of the received multiple alerts and calculating the similarity scores of the pairs of the received multiple alerts is can be further based upon the sensor rank.

The sensor rank can be derived using Shapley values. Calculating the similarity scores of the pairs of the received multiple alerts may utilize normalized discounted cumulative gain (NDCG) metrics

The computer-implemented method can further include categorizing, based on the calculated similarity scores, different alerts of the received multiple alerts into the at least one group of alerts utilizes agglomerative or divisive clustering.

The step of categorizing different alerts of the received multiple alerts into the at least one group of alerts, at least one of the multiple alerts is can be further based upon historical process data, current process data, first principles, or predicted process data.

Different alerts may have a different set of corresponding sensors.

The computer-implemented method can further include pairing two alerts of the received multiple alerts based on at least one of historical data, corresponding set of sensors of the alerts, and timing of the alerts.

Embodiments further include a system for managing alerts and monitoring a process comprising. a digital processor communicatively coupled to an asset management tool. The digital processor configured to for pairs of the received multiple alerts, automatically calculate a similarity score based on the corresponding set of sensors of the pairs of the received multiple alerts, resulting in calculated similarity scores across the received multiple alerts, categorize, based on the calculated similarity scores, different alerts of the received multiple alerts into at least one group of alerts, and generate an output indicative of the at least one group of alerts in a manner enabling increased accuracy in interpreting alerts and in monitoring the process at the given plants.

They system may also include at least one agent configured to generate the received multiple alerts, the agent comprising a machine learning model. The at least one agent can be generated by a user by selecting a set of sensors.

The digital processor can be further configured to calculate the similarity scores pairs of the received multiple alerts based upon a number of sensors that overlap between the corresponding sets of sensors of the pairs of the received multiple alerts.

The digital processor may be further configured to calculate the similarity scores of the pairs of the received multiple alerts with normalized discounted cumulative gain (NDCG) metrics.

The digital processor can be further configured to pair two alerts of the received multiple alerts based on at least one of historical data, corresponding set of sensors of the alerts, and timing of the alerts.

Embodiments also include a non-transitory computer-readable data storage medium comprising instructions to cause a computer to receive multiple alerts regarding a process at a given plant, each alert being based on measurements generated by a corresponding set of sensors of the given plant, for pairs of the received multiple alerts, automatically calculate a similarity score based on the corresponding set of sensors of the pairs of the received multiple alerts, resulting in calculated similarity scores across the received multiple alerts, categorize, based on the calculated similarity scores, different alerts of the received multiple alerts into at least one group of alerts, and generate an output indicative of the at least one group of alerts in a manner enabling increased accuracy in interpreting alerts and in monitoring the process at the given plants.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.

FIG. 1 is a block diagram illustrating an example network environment for alert aggregation and analysis of the example embodiments disclosed herein.

FIG. 2 is a flow diagram illustrating the workflow of an example method of alert management and maintenance response according to an example embodiment.

FIG. 3A is an unsorted table and a sorted table comprising sensor contribution to an alert utilized by example embodiments of the present disclosure.

FIG. 3B is a set of tables comparing a second alert to the alert shown in FIG. 3A utilized by example embodiments of the invention.

FIGs. 4A and 4B are diagrams showing an example of hierarchical clustering and resulting dendrograms in embodiments.

FIG. 5 is a schematic view of a computer network in which embodiments can be implemented.

FIG. 6 is a block diagram of a computer node or device in the computer network of FIG. 5.

DETAILED DESCRIPTION

A description of example embodiments follows.

Monitoring and controlling large plant processes, such as but not limited to chemical and refinery processing, requires the aggregation and analysis of large datasets provided by sensors monitoring the process. Asset health monitoring tools and programs, for example Aspen Technology Inc.'s Mtell®, are used to analyze this large amount of data and provide indications, alerts or warnings if normal operation is interrupted or may be interrupted in the foreseeable future. Such indications, alerts, and warnings allow for timely corrective action to be taken. However, due to the massive size of the datasets being analyzed and the complexity of the process being monitored, many different alerts can be generated without a way for a supervising user to understand each alert's evolution, current relevance, and relative meaning. Users may need to cross-reference multiple data points and perspectives to ascertain the truth behind or reasons for an alert. This complex and multi-factor determination often results in delays and potential misinterpretations. Additionally, relevant information may be spread across multiple tools and platforms that fail to centralize collaborative efforts, and thus valuable insights and historical context, crucial for decision-making, are lost or buried in communication silos. This results in a stagnant decision-making process where users, when faced with an alert, have a constrained range of action options. The path from understanding an alert to deciding on a solution is neither intuitive nor efficient.

Embodiments of the present disclosure include an alert manager that can include one or combination of the following: i) introduces a dynamic 'issue' container that updates with alerts' evolution, providing a singular view of the status and history of the associated problem/asset/process chain, ii) centralizes collaboration, ensuring all stakeholders access to consistent information, means to share comments, and ability to align on decisions, iii) connects alerts to associated assets in the context of their site and process chain, facilitating a faster diagnosis of potential issues, and iv) integrates tools that allow users to explore the current state and historical context of connected sensors and agents, making decision-making more informed and streamlined. The disclosed alert manager offers a holistic and efficient alert management system that accelerates users from awareness to action, leveraging historical data and fostering real-time collaboration.

Asset health monitoring tools may include the function of creating agents, for example a machine learning module. A user can create an agent that targets and monitors for various failures in a certain sub assembly of a piece of equipment, such as a lubrication system of a rotating machine, or could target a specific failure state such as seal failure, for non-limiting example. Other sub-assemblies, assemblies, pieces of equipment, sub-systems, and systems are similarly suitable. Other target or failure modes, states, or phases of operation are similarly suitable. Multiple or combinations of such agents can be created based on various failure modes (states) or equipment sub-assemblies they are trying to monitor. Agents can be user-selectively enabled by providing users with a choice of including or excluding a sensor into an agent's model based on the relationships they want to capture. The model can use data from the included sensors to provide predictions of current or future sub assembly failure and to provide alerts based on those predictions. In other words, a user can select a set of sensors to include as inputs for a monitoring agent; and the monitoring agent is defined or otherwise configured to use a model, which may be a machine learning module or an equivalent, to determine or predict the monitored sub assembly or process' failure. If the model predicts or determines failure, the corresponding monitoring agent provides an alert to a user notifying them (in specific context and detail) and enabling corrective action.

In some embodiments, there is an optimum set of sensors which creates the best agent for monitoring a subsystem of a piece of equipment (for non-limiting example: separate agents for the sealing subsystem and the lubrication subsystem of a turbine), and adding/removing sensors can be detrimental to the agent's performance. So, various sensor combinations can be used to create multiple monitoring agents, and there is often overlap in sensors between agents monitoring different equipment. Sensors can also be from upstream equipment, downstream equipment, or other extrinsic ones too. For non-limiting example, sensors such as ambient temperatures, cooling water input temperatures, humidity etc. could be a common input to multiple agents. As the complexity of the monitored process increases, the number of agents and therefore possible number of alerts can grow exponentially threatening to overwhelm a user, incurring the drawbacks discussed above, and possibly preventing or delaying corrective action.

Overlap of sensors between agents can result in alerts across multiple agents and equipment at the same time, where the issue originally is in only one of the system's sub-assemblies or the result of a single sensor's behavior. Despite this, the user sees multiple alerts from different agents. Such a volume of alerts can result in a case of information overload for the user as they are overburdened with multiple alerts, and they must then look at each alert manually and analyze them. A singular issue could generate many alerts obscuring the fundamental problem. Sometimes this "cascading" alert behavior creates a backlog of alerts which the user must address one at a time resulting in decision fatigue, and important alerts can be overlooked. This can cause catastrophic failures and accidents which could have been prevented if a user had access to a tool which classifies/groups these alerts into issues reducing a lot of the duplicate effort of individually analyzing alerts.

Embodiments of the present disclosure pertain to solving the problem of duplicative, overwhelming, and "cascading" alerts by creating a single number metric that measures the degree of similarity between two alerts based on: (i) the overlap of sensors between the two alerts, and (ii) considering the marginal contribution of various sensors in generating an alert. Subsequently an alert manager uses the similarity score to group and classify alerts into new issues or link them to historical issues and alerts which helps in managing the alerts downstream. These grouped alerts can then be presented to a user in a single interface, such as an "issue" container, along with further analysis on alert severity. The user interface can be updated in real time to keep the user up to date with the current alert status as well as the current relationships between those alerts. The user interface may also enable a user to track an alert over time to view its evolution as well as provide comparisons to similar historical alerts. These functions help guide a user to important alerts and quickly identify current or future problems with the monitored plant process allowing for swift action to be taken. This action includes, but is not limited to, altering plant process control parameters, performing maintenance, sub assembly shut down, repairing process components, fixing malfunctioning sensors, changing plant behavior, or the like.

Example Network Environment for Plant Processes

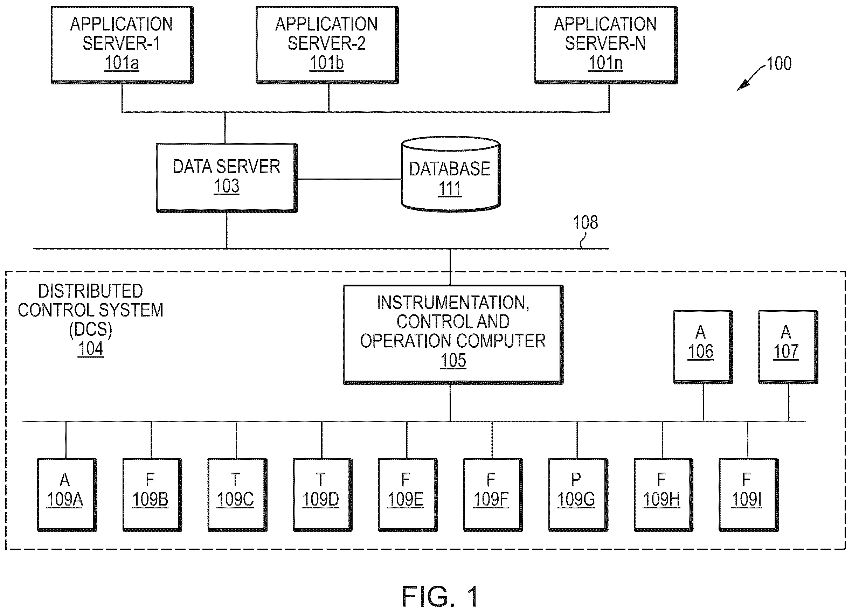

FIG. 1 is a block diagram of an example network environment 100 providing alert aggregation and analysis in embodiments. System computers 101, 102 may operate as controllers, host asset health monitoring tools, and execute the disclosed alert manger. In some embodiments, each one of the system computers 101, 102 may operate alone, or the system computers 101, 102 may operate together as distributed processors contributing to real-time operations. In some embodiments, additional system computers 112 may also operate as distributed processors contributing to the real-time operation as a controller or provide or assist with the other functions of system computers 101, 102. System computers 101, 102 may include a user interface to provide (display or otherwise render) to a user alerts, generated by asset health monitoring tools, and outputs of the disclosed alert manager. System computers 101, 102 may also enable a user to update or alter plant processes using their functions as controllers based on the provided alerts generated by asset health monitoring tools and outputs of the disclosed alert manager. In some embodiments, asset health monitoring tools and the disclosed alert manager may be hosted on and run by computers external to example network environment 100, which can be dedicated to process control applications.

The system computers 101 and 102 may communicate with the data server 103 to access collected data for measurable process variables from a historian database 111. Historian database 111 (the data therein) may be accessed and utilized by the asset monitoring tools and alert manager. The data server 103 may be further communicatively coupled to a distributed control system (DCS) 104, or any other plant control system, which may be configured with instruments 109A-109I, 106, 107 that collect data at a regular sampling period (e.g., one sample per minute) for the measurable process variables. Instruments 109A-109I, 106, 107 can be or include sensors that are utilized by monitoring agents or used to train their component machine learning modules. Instruments 106, 107 are online analyzers (e.g., gas chromatographs) that collect data at a longer sampling period. The instruments 109A - 109I, 106, 107 may communicate the collected data to an instrumentation computer 105, also configured in the DCS 104, and the instrumentation computer 105 may in turn communicate the collected data to the data server 103 over communications network 108. The data server 103 may then archive the collected data in the historian database 111 for model calibration and inferential model training purposes. The data collected varies according to the type of target plant process (such as crude processing in a refinery plant, or chemical processing in a pharmaceutical industrial or similar processing plant, for non-limiting example).

The collected data may include measurements for various measurable process variables used for process control, agent training and creation, alert management, and/or asset monitoring. These measurements may include, for example, a feed stream flow rate as measured by a flow meter 109B, a feed stream temperature as measured by a temperature sensor 109C, component feed concentrations as determined by an analyzer 109A, and reflux stream temperature in a pipe as measured by a temperature sensor 109D. The collected data may also include measurements for process output stream variables, such as, for example, the concentration of produced materials, as measured by analyzers 106 and 107. The collected data may further include measurements for manipulated input variables, such as, for example, reflux flow rate as set by valve 109F and determined by flow meter 109H, a re-boiler steam flow rate as set by valve 109E and measured by flow meter 109I, and pressure in a column as controlled by a valve 109G. The collected data reflect the operation conditions of the representative plant during a particular sampling period. The collected data is archived in the historian database 111 for model calibration and inferential model training purposes.

The system computers 101 or 102 may execute various types of process controllers for online or offline deployment purposes to control the monitored system or plant process. The output values generated by the controller(s) on the system computers 101 or 102 may be provided to the instrumentation computer 105 over the network 108 for an operator to view or may be provided to automatically program any other component of the DCS 104, or any other plant control system or processing system coupled to the DCS system 104. In some embodiments, the instrumentation computer 105 can store the historian database 111 in the data server 103 and execute the plant process controller(s) in a stand-alone mode. Collectively, the instrumentation computer 105, the data server 103, and various sensors and output drivers (e.g., 109A-109I, 106, 107) form the DCS 104 and can work together to implement and run embodiments of the present disclosure. Process controllers, executed by system computers 101 or 102, may control the monitored system or plant (chemical, industrial, etc.) process based on outputs provided by the asset monitoring tool and the alert manager.

The example architecture 100 of the computer system supports the process operation of a representative plant (factory, refinery, and the like). In some embodiments, the representative plant may be, for non-limiting example, a refinery or a chemical processing plant having a number of measurable process variables, such as, for example, temperature, pressure, and flow rate variables. It should be understood that the present disclosure may use a wide variety of other types of technological processes and/or equipment in the useful arts in addition to or as alternatives to those described herein.

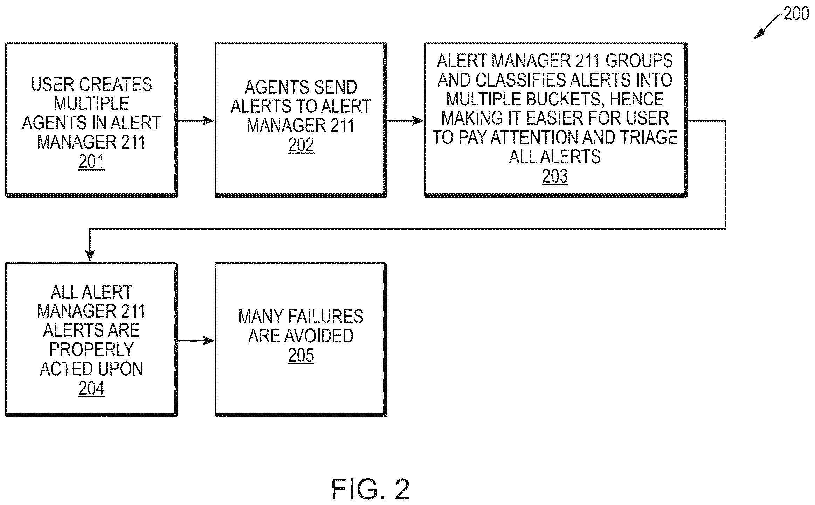

FIG. 2 is a flow diagram illustrating the workflow 200 of an example method for alert management and maintenance response according to an example embodiment. Workflow/method 200 is used in conjunction with an alert manager 211, for non-limiting example the Mtell® alert manager (by Aspen Technology, Inc.) but can be used with other asset management tools and software. In some embodiments, the alert manager 211 is a feature (or user-operational function) in an overall asset management tool or software program. Other manager features and other configurations of the asset management tools and software are suitable for implementing embodiments (i.e., workflow 200) of the present disclosure.

Workflow 200 may be used to constantly monitor an ongoing plant process. To begin, a user initializes, configures for execution, or otherwise creates 201 multiple agents in the working alert manager 211 (e.g., Mtell® by Aspen Technology, Inc.). These agents utilize sets of sensors 109A - 109I, 106, 107, etc. to monitor parts, sub assemblies, components, inputs, outputs, and other variables of a monitored process. Agent creation can include the selection of a particular set of sensors to be used by a respective agent. Sensors may be or overlap with instruments 109A-109I, 106, 107 used in plant process control. The agents may use machine learning models and modules to analyze and predict behavior of the monitored process based on: the output of select sets of sensors, first principles, trained models, machine learning, and/or historical plant data, including but not limited to information stored in historian database 111 and accessed using data server 103. A person of ordinary skill in the art would understand that agents can be of any form and utilize any tool, models, programs, hardware, and software sufficient to enable them to determine and/or predict plant process behavior based on sensor output data.

The following pseudo code demonstrates a non-limiting example of agents utilized by embodiments of the invention for purposes of illustration. An agent for a compressor's bearing health monitoring: 1) a user imports from the historian database into asset health monitoring software, for example Mtell® by Aspen Technology, Inc., database the data for all sensors collecting data for that compressor; 2) a user based on their domain expertise selects a subset of sensors which could be useful in detecting a problem in bearing health, for example bearing temperature, lubricating oil temp, bearing jacket cooling water inlet and outlet temperatures, vibration sensors for that bearing, and rpm of the compressor shaft 3) a user selects a time period in the history where the machine was running normally excluding all the startup, shutdown, offline, maintenance, etc. periods; 4) the asset health monitoring software creates an agent (which can be a machine learning model) that determines the behavior and relationships between the selected sensors' data during the normal operating period of the machine; 5) The agent is now deployed live to monitor bearing health; 6) if the agent (or other deployed agents) observes a behavior in the values of the selected sensors' data that was not seen during the normal operating period, it sends an alert; and 7). The agent can also provide the percentage contribution of the selected sensors towards the sent alert which is then used to calculate alert similarity with other alerts.

Similar agents can be utilized for other components of a monitored plant or process, such as a heat exchanger, by selecting a subset of sensors from the main group which could be useful in detecting a problem in the exchanger's health, for example cooling fluid inlet and outlet temperatures, heating fluid inlet and outlet temperatures, flow rate of both fluids, and pressure drop across the inlet and outlet. A person of ordinary skill in the art would understand that sensors can be selected to generate agents that monitor the health and behavior of any desired component, process, or element of a monitored plant.

If one or more of the agents identify or predict abnormal plant or process behavior, those agents send 202 alerts to the alert manager 211. Users may dictate, program or calculate desired thresholds identifying abnormal plant or process behavior during creation of agents and using the asset managing tool. Subsequently, the asset manager 211 groups and classifies 203 alerts into multiple categories or groupings (i.e., buckets). In this step 203, alerts can be categorized, consolidated, emphasized, or deemphasized enabling a user to pay attention to and triage all alerts. Further to grouping and classification of alerts in step 203, the alert manager 211 may analyze the sent alerts and provide diagnosis of fundamental problems and identification of potential corrective actions. A user interface may be utilized by the alert manager 211/step 203 to present to the user the classified alerts along with one or more indications of any relevant analysis, historical data, suggested remediation actions, confidence intervals, or other additional information generated by asset management tools, agents, process control system 100, or alert manager 211.

Based on the output of the alert manger/step 203 the proper corrective action can be taken 204 in response to alerts. This corrective action may be initiated by a user or be automatically carried out by a plant process control system 104 as shown in Fig. 1. The corrective action results in the avoidance 205 of failures or suboptimal process behavior.

Workflow/method 200 and other embodiments of the present disclosure provide improvements over existing prior art that lack features that allow and enable users to manage processing plant alarms efficiently. Typically, in a process control or monitoring system, there are several ongoing alarms, as one sensor can impact multiple equipment and an issue in one piece of equipment upstream can cause issues in the subsequent equipment downstream. (For example, higher than normal cooling water inlet temperature can impact multiple equipment and trigger alerts from multiple agents monitoring these different equipment). In this situation, the user needs to manually triage (by analyzing sensor data in the alerting agent, cross referencing with other open alerts, and considering the broader operational context of the system) and close each alarm individually. However, with workflow/method 200, alerts related to the same issue can be automatically grouped together for the user. In some embodiments, grouping alerts may not be done automatically and intentionally delayed. For example, grouping alerts for historical alerts can be delayed by a user for a later time for different purposes (e.g., a time chosen by a user). Instead of leaving the user to triage each alarm individually, embodiments 200 of the present disclosure enable users to address the system grouped alerts collectively as one issue decreasing the time between step 202 sending alerts and step 204 acting upon alerts (by the user or automatically by a control system 104, or any combination thereof).

Furthermore, for a better understanding of why an alarm occurred, the workflow/method 200 allows users to request the system to search for and rank any alarms in the history which resemble the newly generated alarm as part of step 203. This feature enables users to review engineer notes from similar issues from the past and potentially take the same corrective action to resolve the current alarm, again increasing responsiveness to the newly/presently identified issues.

Embodiments (e.g., method 200) of the present disclosure can employ two components to process different alerts into groups (based on similarity of alerts) and to classify/link them to current and/or historical issues: (1) calculating similarity score between two alerts and (2) using similarity score to group alerts.

Calculating similarity score between two alerts

In order to quantify how close (similar) two alerts are to each other, a single number metric is created which is called a "similarity score." Embodiments 200 at step 203, via alert manager 211, utilize this score to gauge the degree of similarity between two alerts.

The similarity score considers at least two factors to calculate its output. The first factor is the number of sensors (e.g. instruments 109A-109I, 106, 107 used in plant process control) that overlap between the two alerts (since alerts can come from different agents/models which could have different sensors, some sensors can be in common and some not). The second factor is the contribution of each of these overlapping sensors to the corresponding alerts (to take into consideration the degree of causal role these overlapping sensors are playing into corresponding alerts). To determine the contribution of sensors to an alert, in some embodiments, the alert manger 211 uses Shapley value based methods which produce percentage sensor contributions for each of the sensors to cause an alert in the agent/model. Shapley values, derived from cooperative game theory (for non-limiting example, as disclosed in Lundberg, Scott M., and Su-In Lee. "A Unified Approach to Interpreting Model Predictions." arXiv:1705.07874v2 [cs.AI], 25 Nov 2017 and implemented in the Python library), offer a way to determine feature importance in a machine learning model. Each feature in the model is viewed as a 'player' in a game where the 'payout' is the prediction. Shapley values calculate the average contribution of each feature across all possible combinations of features. This is done by comparing the prediction with and without the feature. The importance of a feature is proportional to its Shapley value - a higher Shapley value indicates a larger impact on the prediction. By distributing the 'credit' (i.e., relative contribution) for a prediction among the features, Shapley values provide an intuitive measure of feature importance. A person of ordinary skill in the art would understand that alternative analysis methods and tools can also be used to analyze sensor overlap, contribution, and relative importance.

Embodiments (e.g., method 200, alert manager 211) of the present disclosure utilize an application of normalized discounted cumulative gain ("NDCG") metric to calculate the similarity between two alerts generated by different agents. NDCG is a metric which has been used to evaluate the quality of recommendations in information retrieval systems such as search engines and recommendation engines. It is historically used to measure the effectiveness of ranking models by assessing the quality of an ordered list of results or predictions based on a relevance score.

Applying NDCG to finding alert similarity in embodiments of the present disclosure, if a greater number of identical sensors appear near the top of the sensor contributors list for two alerts, then the similarity between these alerts progressively increases.

Method 200 (at step 203) or alert manager 211 calculate similarity between alerts using NDCG as follows. Sensor contributions from one alert is treated as the reference for a second alert and is used as the basis for calculating the NDCG score. Since NDCG is an asymmetric metric (NDCG of A to B can be different than that of B to A), to make it symmetric the same process is repeated by using the second alert as reference for the first one to calculate the NDCG score again. The two NDGC scores are averaged, giving the final similarity score which is now a symmetric metric. One property of an NDCG score is that its range is between 0 to 1, a score of 0 meaning no similarity and 1 meaning exactly similar.

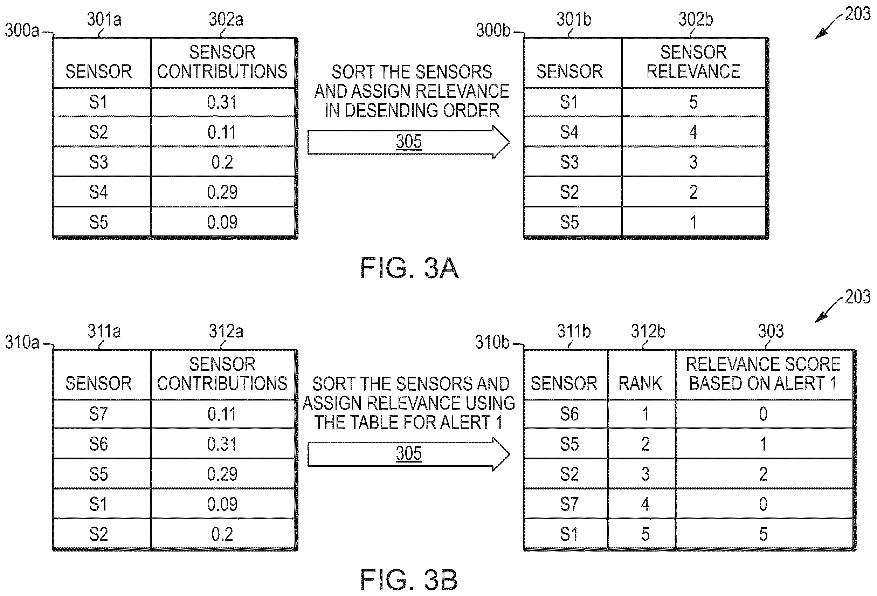

FIG. 3A shows a non-limiting example unsorted table 300a and a sorted table 300b comprising sensor contribution to an alert illustrative of embodiments (e.g., method 200, alert manager 211) of the present disclosure. In the illustrated example, Tables 300a and 300b reflect a set of sensors (S1-S5) 301a, 301b utilized to generate an alert by an agent/model. In table 300a, for each sensor S1, ..., S5, sensor contribution 302a to the subject alert is calculated using the Shapley-value based method. In particular, sensor S1's contribution to the subject alert is calculated to be 0.31 by the Shapley-value based method. Sensor S2's contribution is calculated to be 0.11. Sensor S3's contribution is calculated to be 0.2. Sensor S4's Shapley-value contribution is calculated at 0.29, and sensor S5's calculated contribution is 0.09.

In response to table 300a, process 305 reorganizes unsorted table 300a and forms sorted table 300b. Specifically, process 305 organizes (orders) sensors (S1-S5) based on their calculated alert contribution prioritizing highest calculated Shapley-value to lowest. In turn, process 305 assigns a respective sensor relevance rank (also referred to herein as sensor rank) 302b to each sensor in table 300b based on the prioritized order of contributions, the lowest contributor being assigned a relevance score of 1 and next lowest contributor being assigned a relevance score incremented by 1, and so on. Consequently, for the highest contributor sensor S1, the process 305 assigns the highest relevance score (5 in the illustrated example). In this example, the alert data shown in FIG. 3A is used as "alert 1" and a sensor relevance score is calculated from alert 1 to a different "alert 2" using NDCG. For a sorted table 310b (FIG. 3B), alert 2 is created in a similar manner to that (table 300b) in FIG. 3A.

FIG. 3B is a set of tables 310a, 310b (unsorted and sorted, respectively) comparing a second alert (alert 2) to the alert (alert 1) shown in FIG. 3A in the non-limiting example embodiment of the present disclosure. Column 311a of table 310a corresponds in format to column 301a of table 300a (FIG 3A) and is a list of unsorted sensors (S7, S6, S5, S1, S2) pertinent to alert 2. Respective sensor contribution 312a for the second alert, "alert 2" is shown in a second column in table 310a. Specifically, the table column 312a shows sensor S7 has a Shapley-value based calculated contribution of 0.11. Sensor S6 has a Shapley-value based calculated contribution of 0.31. Sensor S5 has a Shapley-value based calculated contribution of 0.29. Sensor S1 has a Shapley-value based calculated contribution of 0.09. Sensor S2 has a Shapley-value based calculated contribution of 0.2.

To create sorted table 310b from unsorted table 310a, process 305 orders and ranks the sensors according to descending calculated contribution 312a (highest to lowest) to alert 2 and assigns sensor relevance (rank) 312b. That is, process 305 prioritizes the highest calculated contributor, sensor S6, and ranks it first in column 312b in table 310b. Process 305 ranks next highest calculated contributor, sensor S5, as second most relevant sensor in column 312b. Process 305 ranks third in column 312b sensor S2. Process 305 ranks fourth sensor S7, and at fifth place sensor S1 having the lowest calculated contribution 312a.

Included in table 310b is a comparative column 303 for determining sensor relevance between alert 1 and alert 2, especially for those sensors in common. For each sensor listed in column 311b (pertinent to and sorted based on its contribution to alert 2), the sensor relevance at table 310b column 303 indicates ranking for a sensor's relevance to alert 1 taken from column 302b of table 300b. Sensors not in alert 1 table 300b and thus did not contribute to alert 1 are given a 0 (e.g. S6 and S7) in alert 2 table 310b comparative column 303. Sensor 6 has an alert 1 relevance score of 0, Sensor 5 has an alert 1 relevance score of 1, Sensor 2 has an alert 1 relevance score of 2, Sensor 7 has an alert 1 relevance score of 0, and Sensor 1 has an alert 1 relevance score of 5.

After table 310b and its component data 311b, 312b, 303 are generated, similarity between alert 1 and alert 2 can be calculated using NDCG scoring techniques. The discounted cumulative gain can be calculated by the formula:

$$DCG_p = \sum_{i=1}^{p} relevance(i)/log_2(i+1) \qquad \text{Equation 1}$$

where $i$ is row numbers 1 through 5 of table 310b, and *relevance (i)* is corresponding relevance score from comparative column 303 for that row.

For the above example, the discounted cumulative gain ("DCG") for the above example is: DCG = $0/log_2(2)$ + $1/log_2(3)$ + $2/log_2(4)$ + $0/log_2(5)$ + $5/log_2(6)$ = 3.56519

Next, the terms of Equation 1 are arranged in decreasing order by rankings and the DCG calculated to get the ideal Discounted cumulative gain ("IDCG"). That is $i$ is 1 through 5 (the number of sensors ranked in tables 300b, 310b), and corresponding term *relevance (i)* is 5, 4, 3, 2, 1 respectively, written as follows:

$$IDCG = 5/log_2(2) + 4/log_2(3) + 3/log_2(4) + 2/log_2(5) + 1/log_2(6) = 10.27192$$

Next the normalized DCG ("NDCG") is calculated by the formula:

$$NDCG = DCG/IDCG = 3.56519/10.27192 = 0.347. \qquad \text{Equation 2}$$

Therefore, in the utilized example, it can be said that alert 2 has 34.7% similarity to alert 1.

This process 305 can be repeated by calculating the NDCG using alert 2 as a reference (forming tables like 300a and 300b for alert 2 and tables like 310a and 310b for alert1) and then average the two values (the above NDCG = 0.347 where alert 1 is the reference, and the NDCG where alert 2 is the reference) to get the final similarity score for alert 1 and alert 2 to each other, which is a symmetric metric.

## Using similarity score to group alerts

The objective of creating a metric to measure the degree of similarity between alerts is to be able to group and classify the alerts into groupings or buckets (by method 200, step 203, alert manager 211 of FIG 2) making the alerts ultimately easier to handle and process by the user. By creating and using this metric, the alert manager 211 can also compare and link a current alert to past alerts or issues from process or plant history. In turn, such logical linking can help to provide the user more context on the alert based on its resemblance to a historical alert and what actions were taken to investigate and mitigate that alert. Both of these abilities by embodiments (method 200, alert manager 211) enable faster responses to potential plant and process issues generating the alerts and may be used by both a user or an automated process control system (e.g., DCS 104 of FIG 1) to control, operate, fix, or otherwise interact with the monitored plant or process.

The second part of embodiments (method 200/alert manager 211 at step 203 in FIG 2) of the present disclosure uses agglomerative hierarchical clustering to cluster similar alerts into groups. Hierarchical clustering is a method of cluster analysis that seeks to build a hierarchy of clusters. The goal is to create clusters in such a way that similar alarms (alerts) are in the same cluster while dissimilar alarms (alerts) are in different clusters. A person of ordinary skill in the art would understand that alternative clustering methods and tools may be used to group alerts based on calculated similarity scores.

There are two main strategies for hierarchical clustering, namely Agglomerative and Divisive. Agglomerative is a "bottom-up" approach. Each observation starts in its own cluster of alerts, and pairs of clusters are merged as one moves up the hierarchy. Divisive is a "top-down" approach. All observations start in one cluster of alerts, and splits are performed recursively as one moves down the hierarchy.

The results of hierarchical clustering can be presented in a dendrogram, which is a tree-like diagram showing the arrangement of the clusters of alerts produced by the corresponding analyses. One of the advantages of hierarchical clustering is that any valid measure of distance can be used to compare two points (alerts), for example Euclidean distance, cosine distance etc., but the following non-limiting example uses (1 -similarity score) the distance measure for purposes of ease of illustration.

A non-limiting example of Agglomerative clustering of a group of alerts utilized by embodiments/method 200/alert manager 211 follows. The first step is to choose a set of alerts on which to run the clustering algorithm. Various criteria can be used to filter the set of alerts such as only using alerts from the same equipment, or all alerts between two dates, all alerts by a particular agent etc. Once an initial set of alerts is selected, the alert manager 211 can run Agglomerative hierarchical clustering on the selected set using the (1 - similarity score) as the distance measure.

Now the alert manger 211 groups similar data points (alerts) together to form a hierarchy of alert clusters. It starts by treating each alert as an individual cluster. Then, alert manager 211 calculates the distance (1- similarity score, for non-limiting example) between each pair of clusters and merges the two closest clusters into one. That is, in our non-limiting example, alert 1 and alert 2 have a symmetric similarity score to each other as detailed above (using Equations 1 through 2 and their averages resulting in the final similarity score). Alert manager 211 calculates the distance between alert 1 and alert 2 as (1 - their similarity score). Call this $distance_{12}$. Alert manager 211 similarly calculates distance between each pair of alerts, such as $distance_{13}$ between alert 1 and alert 3, $distance_{23}$ between alert 2 and alert 3, and so on. According to our non-limiting example distance measure, $distance_{13}$ = (1 - similarity score between alert 1 and alert 3). $Distance_{23}$ = (1 -similarity score between alert 2 and alert 3). And so on.

Next alert manager 211 merges together the two alerts closest in distance, in other words the shortest of $distance_{12}$, $distance_{13}$, $distance_{23}$, . . . etc. Say for ease of illustration $distance_{12}$ is the shortest distance meaning alert 1 and alert 2 are the closest of the pairs of alerts. In that case, alert manager 211 merges together alert 1 and alert 2 into one cluster. The resulting cluster has an effective similarity score to alert n = [(alert 1 and alert n similarity score) + (alert 2 and alert n similarity score)] / 2.

Alert manager 211 repeats this process of: (a) calculating distances (1- similarity score) between pairs of clusters, between alert-cluster pairs, and between pairs of remaining alerts, (b) merging the closest clusters, and (c) updating the calculated distances, until all data points (alerts) are grouped into a single cluster. The result is a tree-like diagram called a dendrogram, which visually represents the hierarchy of clusters. By cutting the dendrogram to a certain height (corresponding to a distance or similarity threshold), a user can determine the number of clusters.

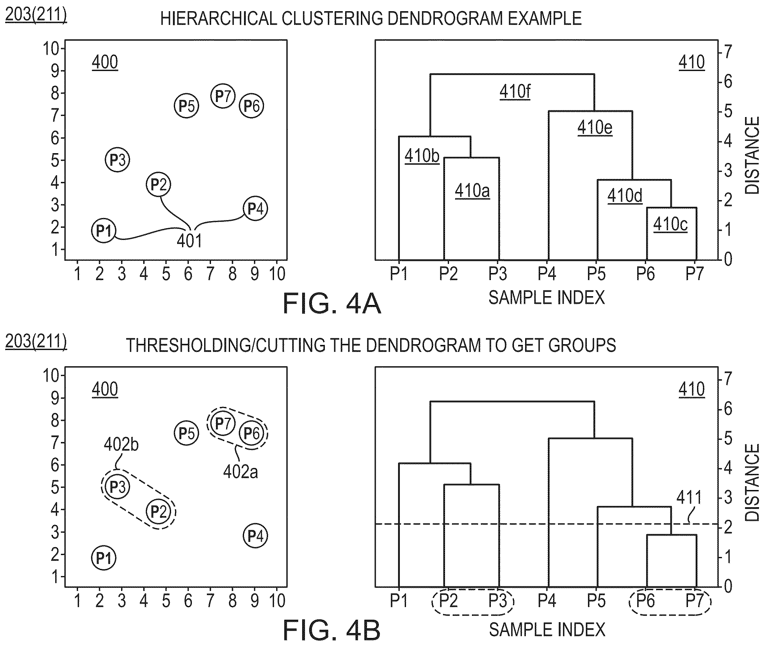

FIG. 4A is a diagram showing an example of hierarchical clustering and resulting dendrograms 410a-f. Graph 400 shows a set of points (alerts) 401 distributed in a two-dimensional space. For non-limiting example, the graph 400 may be of all alerts for a given piece of equipment or monitored process, then the x-axis represents date-time of alert occurrence, and the y-axis represents agents producing the alerts. As a non-limiting example, the graph 400 may be of all plant alerts over a 10-day period, the x-axis being day in the subject period and the y-axis being sub-assembly or involved plant section. And so on for other relevant properties and parameters of received alerts.

Graph 410 shows the resulting dendrograms 410a-f from alert manager 211 (or method step 203 of FIG 2) applying hierarchical clustering to points (alerts) 401. As the "height" (represented by y-axis) increase corresponding to the distance between points 401 needed to form clusters represented by dendrograms 410a-f, alert manager 211/step 203 adds more points (representing alerts) to resulting clusters (alert groupings). A user can select the cutoff distance or height, based on desired cluster specificity.

Now based on a user's preference regarding how similar (proximate) two alerts have to be in order to be put in the same group, a proximity cutoff is determined so all alerts within that proximity cutoff of each other belong to a shared group and alerts outside of the proximity cutoff belong to different groups. Some alerts may not be able to be classified into a group; such is not an unexpected outcome as those alerts could be because of a unique cause not being similar enough to other alerts.

FIG. 4B is a diagram showing alert manager's 211/method step 203's application of the user-specified threshold to the dendrograms 410a-f of FIG. 4A resulting in clusters 402a, 402b of points (alerts) 401. Specifically, alert manager 211/method step 203 applies user-specified threshold height 411 to dendrograms 410a-f of graph 410. In turn, alert manager 211/step 203 groups clusters of points (alerts) underneath threshold height 411 shown on graph 400 of FIG 4B as 402a and 402b. Alert manager 211/step 203 do not consider for grouping associations between points (alerts) in dendrograms 410a-f above threshold height 411.

In some embodiments of the present disclosure, the received and analyzed alerts may include alerts from multiple time periods, including the same alert during different times. By alert manager 211/step 203 analyzing and grouping these temporally disparate alerts, users can gain information about the past and current status of the plant and the evolution of any abnormal behavior. For example, the same alert may be grouped differently during different time periods showing how the same error has changed its downstream effects at those different time periods. Similarly, a group of alerts may grow over time indicating increasing failures and plant distribution. This time dependent alert information, not provided by prior art monitoring systems, aids users in determining the urgency for and type of corrective action to take.

After applying clustering to the received alerts, alert manager 211 may output the derived dendrograms to a user for initial analysis and threshold 411 determination. In some embodiments, alert manager 211 may output to a user indications of clusters (alert groupings) after applying a preset threshold 411. Alert manager 211 may further use information from agents, models, machine learning modules, sensor data, historical data, and other sources to further analyze the grouped alerts to provide additional information to a user, including but not limited to, confidence measurements, predicted plant behavior, proposed actions, estimated source of error, shared cause of alerts, severity of alerts, and the like. Further, these outputs can be used by system controllers (e.g., DCS 104 FIG 1) and the like, directly or indirectly, to automatically control, effect, or otherwise interact with the monitored process or plant as a whole.

Alert manager 211 can enable a user or an automated plant control system to determine a shared cause of alerts based on the generated groups, clusters, indications of clusters, or other outputs. As non-limiting examples, an outputted alert cluster may be composed of alerts that have a specific set of overlapping sensors, indicating the shared cause of those alerts to be that sensors' abnormal readings. In some embodiments, an alert cluster may be composed of alerts that are all downstream from a particular component or sub-assembly indicating the shared cause of those alerts to be the behavior of that component or sub-assembly. The clustering of alerts by alert manager 211 provides a user with additional information, not included when alerts are presented individually, to aid in their investigation for and determination of a shared cause of the clustered alerts. This determination may be done by a user, automatically performed by alert manger 211, or with the use of additional software such as but not limited to plant process control modules. Additionally, in embodiments that include historical alerts, the clustering of new alerts with historical alerts with a known cause can be used to determine, through user analysis or automatically, that the new alerts share that known cause. A person of ordinary skill in the art would understand that a multitude of tools, modules, machine learning process, and the like can be applied to alerts analyzed and clustered by alert manager 211/method 200 and determine, predict, or otherwise indicate shared causes.

Alerts analyzed and clustered by alert manager 211/method 200 in embodiments of the present disclosure do not need to be occurring simultaneously. The methods disclosed herein (detailed above in FIGs 2 through 4A and 4B) can be applied to all alerts that occurred within a predefined time period (e.g., day, week, or month) to better enable a user to investigate and control plant behavior. This is useful as some abnormal behavior may be intermittent or have delayed effects on other plant sub assemblies or components. Similarly, historical alerts and the sensor data used to generate them can also be included in the alert manager's 211 analysis. Clustering current alerts with historical alerts can provide guidance on how best to respond to those alerts, by providing an easy comparison to how past actions effected similar historical alerts.

Example Digital Processing Environment

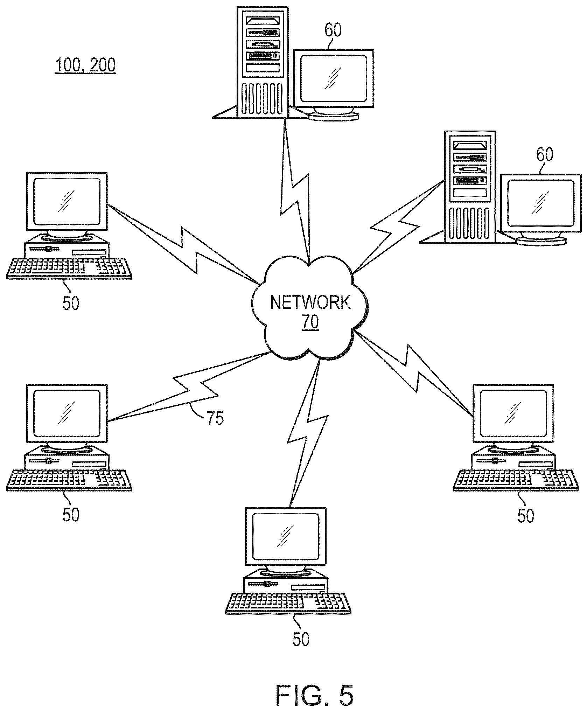

FIG. 5 illustrates a computer network or similar digital processing environment in which the disclosed embodiments 100, 200 may be implemented. Client computer(s)/devices 50 and server computer(s) 60 provide processing, storage, and input/output devices executing application programs and the like. Client computer(s)/devices 50 can also be linked through communications network 70 to other computing devices, including other client devices/processes 50 and server computer(s) 60. Communications network 70 can be part of a remote access network, a global network (e.g., the Internet), cloud computing servers or service, a worldwide collection of computers, Local area or Wide area networks, and gateways that currently use respective protocols (TCP/IP, Bluetooth, *etc.*) to communicate with one another. Other electronic device/computer network architectures are suitable.

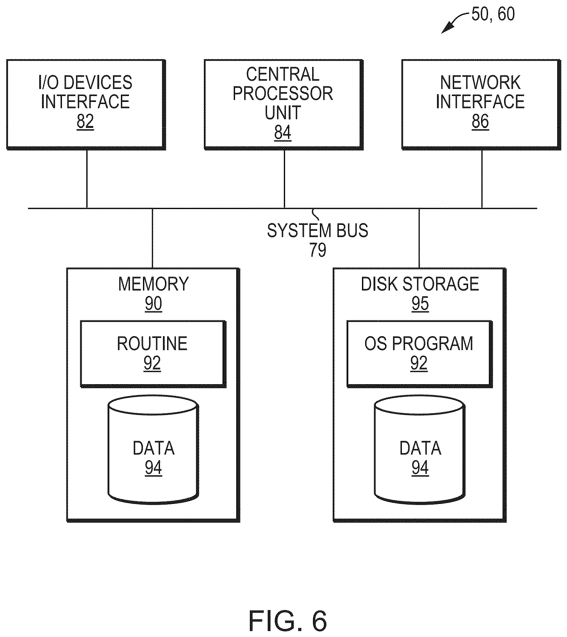

FIG. 6 is a block diagram of the internal structure of a computer (e.g., client processor/device 50 or server computers 60) in the computer system of FIG. 5. Each computer 50, 60 contains system bus 79, where a bus is a set of hardware lines used for data transfer among the components of a computer or digital processing system. Bus 79 is essentially a shared conduit that connects different elements of a computer system (e.g., processor, disk storage, memory, input/output ports, network ports) that enables the transfer of information between the elements. Attached to system bus 79 is I/O device interface 82 for connecting various input and output devices (e.g., keyboard, mouse, displays, printers, speakers) to the computer 50, 60. Network interface 86 allows the computer to connect to various other devices attached to a network (e.g., network 70 of FIG. 5). Memory 90 provides volatile storage for computer software instructions 92 and data 94 used to implement an embodiment (e.g., workflow/method 200 of FIG. 2, and the similarity scoring and clustering functions, and process 305 detailed with respect to n FIGs. 3A, 3B, 4A, and 4B). Disk storage 95 provides non-volatile storage for computer software instructions 92 and data 94 used to implement an embodiment. Data 94 may include plant operating plans, plant scheduling plans, datasets of operating and/or scheduling plant data cases, PCA models, instructions for clustering techniques, hierarchical clustering structures, metadata structures, and so forth as previously discussed. Central processor unit 84 is also attached to system bus 79 and provides for the execution of computer instructions.

In some embodiments, the processor routines 92 and data 94 are a computer program product (generally referenced 92), including a computer readable medium (e.g., a removable storage medium such as one or more DVD-ROM's, CD-ROM's, diskettes, tapes; or a non-removable storage medium, one or more cloud servers, etc.) that provides at least a portion of the software instructions for the disclosed system. Computer program product 92 can be installed by any suitable software installation procedure, as is well known in the art. In another embodiment, at least a portion of the software instructions may also be downloaded over a cable, communication, and/or wireless connection. In other embodiments, the programs are a computer program propagated signal product 75 (FIG. 5) embodied on a propagated signal on a propagation medium (e.g., a radio wave, an infrared wave, a laser wave, a sound wave, or an electrical wave propagated over a global network such as the Internet, or other network(s)). Such carrier medium or signals provide at least a portion of the software instructions for the routines/program 92.

In some embodiments, the propagated signal is an analog carrier wave or digital signal carried on the propagated medium. For example, the propagated signal may be a digitized signal propagated over a global network (e.g., the Internet), a telecommunications network, or other network. In some embodiments, the propagated signal is a signal that is transmitted over the propagation medium over a period of time, such as the instructions for a software application sent in packets over a network over a period of milliseconds, seconds, minutes, or longer. In another embodiment, the computer readable medium of computer program product 92 is a propagation medium that the computer system 50 may receive and read, such as by receiving the propagation medium and identifying a propagated signal embodied in the propagation medium, as described above for computer program propagated signal product. Generally speaking, the term "carrier medium" or transient carrier encompasses the foregoing transient signals, propagated signals, propagated medium, storage medium and the like. In other embodiments, the program product 92 may be implemented as a so-called Software as a Service (SaaS), or other installation or communication supporting end-users.

It should be understood that the flow diagrams, block diagrams, and network diagrams may include more or fewer elements, be arranged differently, or be represented differently. But further it should be understood that certain implementations may dictate the block and network diagrams and the number of block and network diagrams illustrating the execution of the embodiments be implemented in a particular way. Accordingly, further embodiments may also be implemented in a variety of computer architectures, physical, virtual, cloud computers, and/or some combination thereof, and, thus, the data processors described herein are intended for purposes of illustration only and not as limitations of the embodiments.

While example embodiments have been particularly shown and described, it will be understood by those skilled in the art that various changes in form and details may be made therein without departing from the scope of the embodiments encompassed by the appended claims.

Examples

The following numbered examples are embodiments.

1) A computer-implemented method of plant process monitoring, comprising:

receiving multiple alerts regarding a process at a given plant, each alert being based on measurements generated by a corresponding set of sensors of the given plant, said receiving being performed by a digital processor;
for pairs of the received multiple alerts, automatically calculating by the digital processor a similarity score based on the corresponding set of sensors of the pairs of the received multiple alerts, resulting in calculated similarity scores across the received multiple alerts; and
categorizing, based on the calculated similarity scores, different alerts of the received multiple alerts into at least one group of alerts, said categorizing being performed by the digital processor in response to the calculating; and
generating output indicative of the at least one group of alerts in a manner enabling increased accuracy in interpreting alerts and in monitoring the process at the given plants.

2) The computer-implemented method of example 1, wherein at least one alert of the received multiple alerts is generated by a machine learning model.

3) The computer-implemented method of example 1 or 2, wherein at least one alert of the received multiple alerts is indicative of failure, damage, likelihood of failure, or malfunction of a process unit of the process at the given plant.

4) The computer-implemented method of any one of examples 1 to 3, wherein at least two alerts of the received multiple alerts occurred during different time periods.

5) The computer-implemented method of any one of examples 1 to 4, further comprising determining a shared cause of different alerts in the received multiple alerts based upon the generated output of the at least one group of alerts.

6) The computer-implemented method of any one of examples 1 to 5, wherein calculating the similarity scores of the pairs of the received multiple alerts is further based upon a number of sensors that overlap between the corresponding sets of sensors of the pairs of the received multiple alerts.

7) The computer-implemented method of any one of examples 1 to 6, wherein each sensor in a corresponding set of sensors has a sensor rank based on the sensor's contribution to an alert of the received multiple alerts, and wherein calculating the similarity scores of the pairs of the received multiple alerts is further based upon the sensor rank.

8) The computer-implemented method of any one of examples 1 to 7, wherein the sensor rank is derived using Shapley values.

9) The computer-implemented method of any one of examples 1 to 8, wherein calculating the similarity scores of the pairs of the received multiple alerts utilizes normalized discounted cumulative gain (NDCG) metrics.

10) The computer-implemented method of any one of examples 1 to 9, wherein categorizing, based on the calculated similarity scores, different alerts of the received multiple alerts into the at least one group of alerts utilizes agglomerative or divisive clustering.

11) The computer-implemented method of any one of examples 1 to 10, wherein in the step of categorizing different alerts of the received multiple alerts into the at least one group of alerts, at least one of the multiple alerts is further based upon historical process data, current process data, first principles, or predicted process data.

12) The computer-implemented method of any one of examples 1 to 11, wherein different alerts have a different set of corresponding sensors.

13) The computer-implemented method of any one of examples 1 to 12, further comprising pairing two alerts of the received multiple alerts based on at least one of historical data, corresponding set of sensors of the alerts, and timing of the alerts.

14) A system for managing alerts and monitoring a process, the system comprising:
a digital processor communicatively coupled to an asset management tool, the digital processor configured to:

receive multiple alerts regarding a process at a given plant, each alert being based on measurements generated by a corresponding set of sensors of the given plant;
for pairs of the received multiple alerts, automatically calculate a similarity score based on the corresponding set of sensors of the pairs of the received multiple alerts, resulting in calculated similarity scores across the received multiple alerts; and
categorize, based on the calculated similarity scores, different alerts of the received multiple alerts into at least one group of alerts; and
generate an output indicative of the at least one group of alerts in a manner enabling increased accuracy in interpreting alerts and in monitoring the process at the given plants.

15) The system of example 14 further comprising at least one agent configured to generate the received multiple alerts, the agent comprising a machine learning model.

16) The system of example 15 wherein the at least one agent is generated by a user by selecting a set of sensors.

17) The system of any one of examples 14 to 16, wherein at least one alert of the received multiple alerts is indicative of failure, damage, likelihood of failure, or malfunction of a process unit of the process at the given plant.

18) The system of any one of examples 14 to 17, wherein the digital processor is further configured to calculate the similarity scores pairs of the received multiple alerts based upon a number of sensors that overlap between the corresponding sets of sensors of the pairs of the received multiple alerts.

19) The system of any one of examples 14 to 18, wherein each sensor in a corresponding set of sensors has a sensor rank based on the sensor's contribution to an alert of the received multiple alerts, and wherein calculating the similarity scores of the pairs of the received multiple alerts is further based upon the sensor rank.

20) The system of any one of examples 14 to 19, wherein the digital processor is further configured to calculate the similarity scores of the pairs of the received multiple alerts with normalized discounted cumulative gain (NDCG) metrics.

21) The system of any one of examples 14 to 20, wherein different alerts have a different set of corresponding sensors.

22) The system of any one of examples 14 to 21, wherein the digital processor is further configured to pair two alerts of the received multiple alerts based on at least one of historical data, corresponding set of sensors of the alerts, and timing of the alerts.

23) A non-transitory computer-readable data storage medium comprising instructions to cause a computer to:

receive multiple alerts regarding a process at a given plant, each alert being based on measurements generated by a corresponding set of sensors of the given plant;

for pairs of the received multiple alerts, automatically calculate a similarity score based on the corresponding set of sensors of the pairs of the received multiple alerts, resulting in calculated similarity scores across the received multiple alerts;

categorize, based on the calculated similarity scores, different alerts of the received multiple alerts into at least one group of alerts; and

generate an output indicative of the at least one group of alerts in a manner enabling increased accuracy in interpreting alerts and in monitoring the process at the given plants

24) The non-transitory computer-readable data storage medium of example 23, wherein in the received multiple alerts, at least one alert is generated from output of at least one machine learning model.

## Claims

1. A computer-implemented method of plant process monitoring, comprising:

receiving multiple alerts regarding a process at a given plant, each alert being based on measurements generated by a corresponding set of sensors of the given plant, said receiving being performed by a digital processor;

for pairs of the received multiple alerts, automatically calculating by the digital processor a similarity score based on the corresponding set of sensors of the pairs of the received multiple alerts, resulting in calculated similarity scores across the received multiple alerts; and

categorizing, based on the calculated similarity scores, different alerts of the received multiple alerts into at least one group of alerts, said categorizing being performed by the digital processor in response to the calculating; and

generating output indicative of the at least one group of alerts in a manner enabling increased accuracy in interpreting alerts and in monitoring the process at the given plants.

2. The computer-implemented method of process monitoring of claim 1 wherein at least one alert of the received multiple alerts is generated by a machine learning model.

3. The computer-implemented method of process monitoring of claim 1 or 2, wherein at least one alert of the received multiple alerts is indicative of failure, damage, likelihood of failure, or malfunction of a process unit of the process at the given plant.

4. The computer-implemented method of process monitoring of any one of claims 1 to 3, wherein at least two alerts of the received multiple alerts occurred during different time periods.

**5.** The computer-implemented method of process monitoring of any one of claims 1 to 4, further comprising determining a shared cause of different alerts in the received multiple alerts based upon the generated output of the at least one group of alerts.

**6.** The computer-implemented method of process monitoring of any one of claims 1 to 5, wherein calculating the similarity scores of the pairs of the received multiple alerts is further based upon a number of sensors that overlap between the corresponding sets of sensors of the pairs of the received multiple alerts.

**7.** The computer-implemented method of process monitoring of any one of claims 1 to 6, wherein each sensor in a corresponding set of sensors has a sensor rank based on the sensor's contribution to an alert of the received multiple alerts, and wherein calculating the similarity scores of the pairs of the received multiple alerts is further based upon the sensor rank.

**8.** The computer-implemented method of process monitoring of any one of claims 1 to 7 wherein the sensor rank is derived using Shapley values.

**9.** The computer-implemented method of process monitoring of any one of claims 1 to 8, wherein calculating the similarity scores of the pairs of the received multiple alerts utilizes normalized discounted cumulative gain (NDCG) metrics.

**10.** The computer-implemented method of process monitoring of any one of claims 1 to 9, wherein categorizing, based on the calculated similarity scores, different alerts of the received multiple alerts into the at least one group of alerts utilizes agglomerative or divisive clustering.

**11.** The computer-implemented method of process monitoring of any one of claims 1 to 10, wherein in the step of categorizing different alerts of the received multiple alerts into the at least one group of alerts, at least one of the multiple alerts is further based upon historical process data, current process data, first principles, or predicted process data.

**12.** The computer-implemented method of process monitoring of any one of claims 1 to 11, wherein different alerts have a different set of corresponding sensors.

**13.** The computer-implemented method of process monitoring of any one of claims 1 to 12, further comprising pairing two alerts of the received multiple alerts based on at least one of historical data, corresponding set of sensors of the alerts, and timing of the alerts.

**14.** A system for managing alerts and monitoring a process, the system comprising:
a digital processor communicatively coupled to an asset management tool, the digital processor being configured to perform the method of any one of claims 1 to 13.

**15.** A non-transitory computer-readable data storage medium comprising instructions to cause a computer to perform the method of any one of claims 1 to 13.

FIG. 1

200

USER CREATES MULTIPLE AGENTS IN ALERT MANAGER 211
201

AGENTS SEND ALERTS TO ALERT MANAGER 211
202

ALERT MANAGER 211 GROUPS AND CLASSIFIES ALERTS INTO MULTIPLE BUCKETS, HENCE MAKING IT EASIER FOR USER TO PAY ATTENTION AND TRIAGE ALL ALERTS
203

ALL ALERT MANAGER 211 ALERTS ARE PROPERLY ACTED UPON
204

MANY FAILURES ARE AVOIDED
205

FIG. 2

**FIG. 3A**

300a — Table (301a SENSOR, 302a SENSOR CONTRIBUTIONS):

| SENSOR | SENSOR CONTRIBUTIONS |
|---|---|
| S1 | 0.31 |
| S2 | 0.11 |
| S3 | 0.2 |
| S4 | 0.29 |
| S5 | 0.09 |

305: SORT THE SENSORS AND ASSIGN RELEVANCE IN DESENDING ORDER →

300b / 203 — Table (301b SENSOR, 302b SENSOR RELEVANCE):

| SENSOR | SENSOR RELEVANCE |
|---|---|
| S1 | 5 |
| S4 | 4 |
| S3 | 3 |
| S2 | 2 |
| S5 | 1 |

**FIG. 3B**

310a — Table (311a SENSOR, 312a SENSOR CONTRIBUTIONS):

| SENSOR | SENSOR CONTRIBUTIONS |
|---|---|
| S7 | 0.11 |
| S6 | 0.31 |
| S5 | 0.29 |
| S1 | 0.09 |
| S2 | 0.2 |

305: SORT THE SENSORS AND ASSIGN RELEVANCE USING THE TABLE FOR ALERT 1 →

310b / 203 — Table (311b SENSOR, 312b RANK, 303 RELEVANCE SCORE BASED ON ALERT 1):

| SENSOR | RANK | RELEVANCE SCORE BASED ON ALERT 1 |
|---|---|---|
| S6 | 1 | 0 |
| S5 | 2 | 1 |
| S2 | 3 | 2 |
| S7 | 4 | 0 |
| S1 | 5 | 5 |

HIERARCHICAL CLUSTERING DENDROGRAM EXAMPLE

FIG. 4A

THRESHOLDING/CUTTING THE DENDROGRAM TO GET GROUPS

FIG. 4B

100, 200

60

60

50

NETWORK
70

75

50

50

50

FIG. 5

50, 60

| I/O DEVICES INTERFACE 82 | CENTRAL PROCESSOR UNIT 84 | NETWORK INTERFACE 86 |
|---|---|---|

SYSTEM BUS
79

MEMORY
90

ROUTINE
92

DATA
94

DISK STORAGE
95

OS PROGRAM
92

DATA
94

FIG. 6

Europäisches
Patentamt

European
Patent Office

Office européen
des brevets

# EUROPEAN SEARCH REPORT

**Application Number**

EP 26 15 4298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 026 518 A1 (ABB TECHNOLOGY AG [CH]) 1 June 2016 (2016-06-01) | 1-15 | INV. G05B23/02 |
| Y | * paragraphs [0001] - [0080] * ----- | 2,7,9 | |
| Y | US 2022/122445 A1 (GUPTA SHREYA [US] ET AL) 21 April 2022 (2022-04-21) * paragraphs [0001] - [0009], [0022] - [0059] * ----- | 2,7 | |
| Y | US 2022/245014 A1 (GUPTA SHREYA [US] ET AL) 4 August 2022 (2022-08-04) * paragraphs [0001] - [0004], [0010] - [0012], [0063] - [0067], [0132] - [0139] * ----- | 9 | |
| A | US 2024/192676 A1 (JOENSUU IIRIS [FI] ET AL) 13 June 2024 (2024-06-13) * paragraphs [0001] - [0005], [0044] - [0053] * ----- | 1-15 | |

**TECHNICAL FIELDS SEARCHED (IPC)**

G05B
G06F

The present search report has been drawn up for all claims

| Place of search | Date of completion of the search | Examiner |
|---|---|---|
| Munich | 21 May 2026 | Postemer, Patricia |

EPO FORM 1503 03.82 (P04C01)

## ANNEX TO THE EUROPEAN SEARCH REPORT
## ON EUROPEAN PATENT APPLICATION NO.

EP 26 15 4298

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2026

| Patent document cited in search report | | | Publication date | Patent family member(s) | | | Publication date |
|---|---|---|---|---|---|---|---|
| EP 3026518 | A1 | | 01-06-2016 | NONE | | | |
| US 2022122445 | A1 | | 21-04-2022 | GB | 2615920 | A | 23-08-2023 |
| | | | | US | 2022122445 | A1 | 21-04-2022 |
| | | | | US | 2023056705 | A1 | 23-02-2023 |
| | | | | WO | 2022086678 | A1 | 28-04-2022 |
| US 2022245014 | A1 | | 04-08-2022 | NONE | | | |
| US 2024192676 | A1 | | 13-06-2024 | BR | 112023020412 | A2 | 05-12-2023 |
| | | | | CA | 3213519 | A1 | 20-10-2022 |
| | | | | CN | 117223014 | A | 12-12-2023 |
| | | | | EP | 4323933 | A1 | 21-02-2024 |
| | | | | KR | 20230172510 | A | 22-12-2023 |
| | | | | US | 2024192676 | A1 | 13-06-2024 |
| | | | | WO | 2022219248 | A1 | 20-10-2022 |

EPO FORM P0459

For more details about this annex : see Official Journal of the European Patent Office, No. 12/82